# EUROPEAN PATENT APPLICATION

(11) **EP 1 809 036 A1**
(43) Date of publication of application: **18.07.2007**
(21) Application number: 05805477.6
(22) Date of filing: 01.11.2005
(51) Int. Cl.: H04N 7/173, G06F 13/00

(54) **SERVER DEVICE, CLIENT DEVICE, AND DATA LIST ACQUIRING METHOD**

(30) Priority: 04.11.2004 JP 2004321305
(71) Applicant: MATSUSHITA ELECTRIC INDUSTRIAL CO., LTD., Osaka 571-8501 (JP)
(72) Inventor: FUKUI, Takayuki c/o Matsushita El. Ind. Co., Ltd., Chuo-ku, Osaka-shi, Osaka 540-6319 (JP); NAKATSUKA, Monta c/o Matsushita El. Ind. Co., Ltd., Chuo-ku, Osaka-shi, Osaka 540-6319 (JP)
(74) Representative: Pautex Schneider, Nicole Véronique
(86) International application number: PCT/JP2005/020125
(87) International publication number: WO 2006/049176

(57) **Abstract**

In order to provide an electronic device capable of obtaining data information list which the user wishes to acquire when performing a sort of the data list information, the device 11 includes: a communication unit 31 which sends and receives a UPnP A/V command to/from the device 10 via the communication path 2, a UPnP A/V command processing unit 401 for processing a UPnP A/V command compliant to the UPnP A/V standard, an extended command processing unit 411 for processing an extended UPnP A/V command, a content information management unit 70 for managing content data information stored in a content memory 71, and the content memory 71 for storing content data.

## Description

### Technical Field

The present invention relates to a system in which, between electronic devices, one device sorts an information list stored in the other device using a keyword, via a wired communication network or a wireless communication network for acquiring a sorted information list.

### Background Art

In an information browser and an e-mail software of a personal computer, when a data list is displayed, selecting specific data enables a sort with a focus on the selected data.

The sort is available for data stored in a device, and in order to sort data stored in another device connected to a network, it is necessary to save, in the original device, the whole data stored in the device connected to a network.

### Disclosure of Invention

### Problems that Invention is to Solve

However, such a data transfer via a network increases network traffic. Furthermore, for a device with limited memory and processing capacity such as an embedded device, it is difficult to perform such a sort since a large amount of data cannot be stored in the original device at one time.

### Means to Solve the Problems

In order to solve the problem, the electronic device of the present invention is an electronic device capable of communicating with the electronic device including: a memory unit which stores data; a data management unit which manages data accumulated in the memory unit; a command processing unit which acquires, by receiving a command, data information stored in the memory unit managed by the management unit and converts the acquisition result into a response command, and a communication unit which receives the command and sends the response command.

With this configuration, the electronic device has an advantage that, when sorting the data information list, acquiring, prior to acquiring the information list, position information of the selected data after sorting enables a sorted display with acquiring the information list once.

Furthermore, the same effect is expected by sending an instruction, from the device which displays the sorted list to the device which provides the information to perform a sort in advance.

### Effects of the Invention

As described above, the electronic device has an advantage that, when sorting the data information list, acquiring, prior to acquiring the information list, position information of the selected data after sorting enables a sorted display with acquiring the information list once.

Furthermore, the same effect is expected by sending an instruction, from the device which displays the sorted list to the device which provides the information so that a sort is performed in advance.

### Brief Description of Drawings

FIG. 1 is a block diagram showing a configuration of devices and main components of the devices.
FIG. 2 is a diagram showing the configuration of folders in a content memory.
FIG. 3 is a diagram showing an example of a screen displaying a list of content information.
FIG. 4 is a diagram showing an example of the screen displaying sorting keywords.
FIG. 5 is a diagram showing an example of the screen displaying a sorted list of content information.
FIG. 6 is a diagram showing a process flow and a communication sequence when acquiring a list of content information using a Browse command.

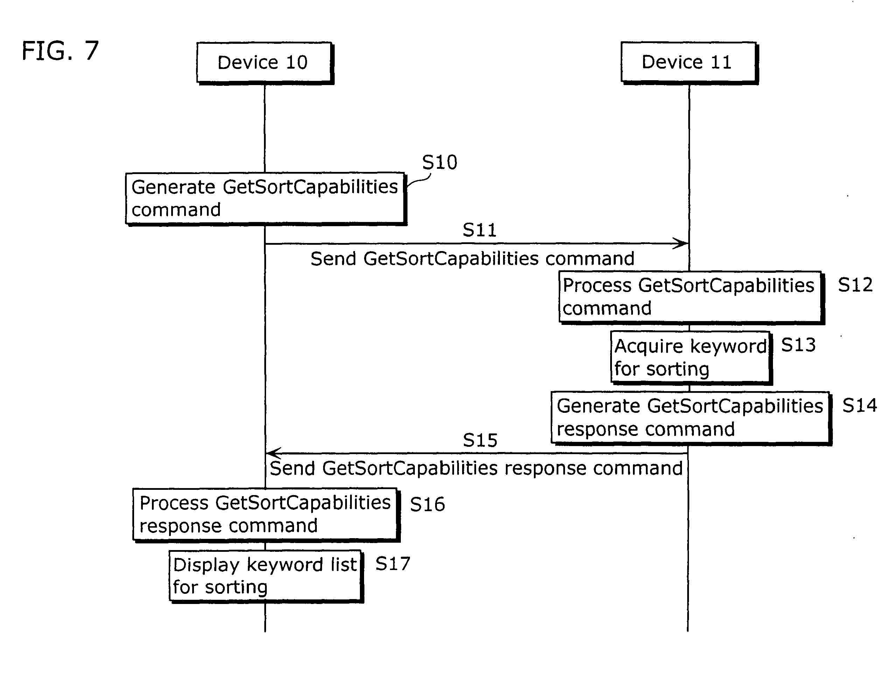

FIG. 7 is a diagram showing a process flow and a communication sequence when acquiring a sorting keyword.

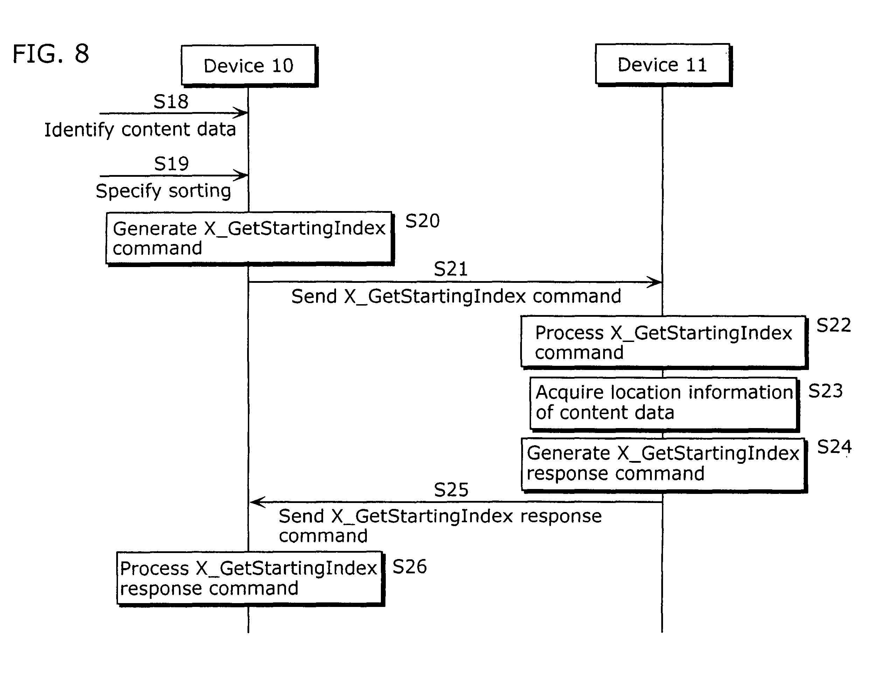

FIG. 8 is a diagram showing a process flow and a communication sequence when acquiring position information of content.
FIG. 9 is a diagram showing a process flow and a communication sequence when acquiring a list of content information using a Search command.
FIG. 10 is a diagram showing a process flow and a communication sequence when acquiring a search keyword.
FIG. 11 is a diagram showing a process flow and a communication sequence when acquiring a list of content information using an X_Browse command.
FIG. 12A is an example of content information list on the display.
FIG. 12B is an example of positions of input keys in an operating unit.

### Numerical References

- 2: Communication path
- 5: Operating unit
- 6: Display
- 10, 11: Devices
- 30, 31: Communication units
- 70: Content information management unit
- 71: Content memory
- 410, 411: Extended command processing unit
- 400, 401: UPnP A/V command processing unit

### Best Mode for Carrying Out the Invention

### (First Embodiment)

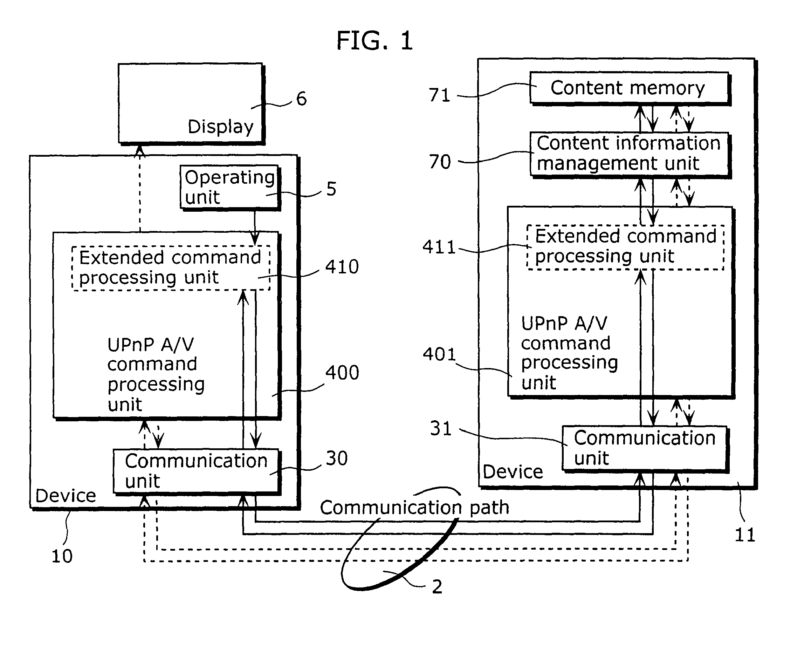

FIG. 1 is a block diagram showing main components of a device 10 and a device 11. Each of the devices includes a unit for communicating with the other device and a protocol stack of Universal Plug and Play A/V (hereinafter referred to as UPnP A/V). The devices send a UPnP A/V command to a device conforming to the UPnP A/V to remotely control the device, receive a UPnP/AV command, and operate according to the received command.

As shown in FIG. 1, the device 10 includes a communication unit 30, a UPnP A/V command processing unit 400, an operating unit 5 and a display 6.

The UPnP A/V command processing unit 400 converts a command inputted from the operating unit 5 into a UPnP A/V command defined by the UPnP A/V standard. The UPnP A/V command processing unit 400 also processes a UPnP A/V response command.

An extended command processing unit 410 and an extended command processing unit 411 process an extended UPnP A/V command. In the first embodiment, X_GetStartingIndex command is processed.

The communication unit sends, between the device 11 and others, the UPnP A/V command to the device 11 via a communication path 2, and the communication unit also receives a result of execution of the command sent from the device 11. In the first embodiment, the communication path is a wired communication path such as the Ethernet (Trademark), or a wireless communication path such as the IEEE 802.110/b/g and the Bluetooth.

The operating unit 5 is, for example, a remote controller for controlling the device 10 or for inputting a command to control the device 11, or a control button incorporated in the device.

The display 6, is a television and the like connected to an external terminal of the device when the device is a DVD recorder/player. The display 6 is, for example, an LCD monitor when the device is a Digital Video (DV) camera.

Meanwhile, the device 11 includes a communication unit 31, a UPnP A/V command processing unit 401, a content information management unit 70 and a content memory 71.

The content memory 71 stores data such as image data, still image data, and audio data (hereinafter collectively referred to as content data).

The content information management unit 70 manages information of content data stored in the content memory 71. The information of content data includes the title of the content data, the date and time when the data is recorded, or in a case of recorded data of a TV or radio broadcast program, the information includes the name of the recorded channel, cast information, or attributes related to overwriting/erasing the data. The content memory 71 generates plural folders represented in a hierarchical structure, and the content data may be stored in the folders.

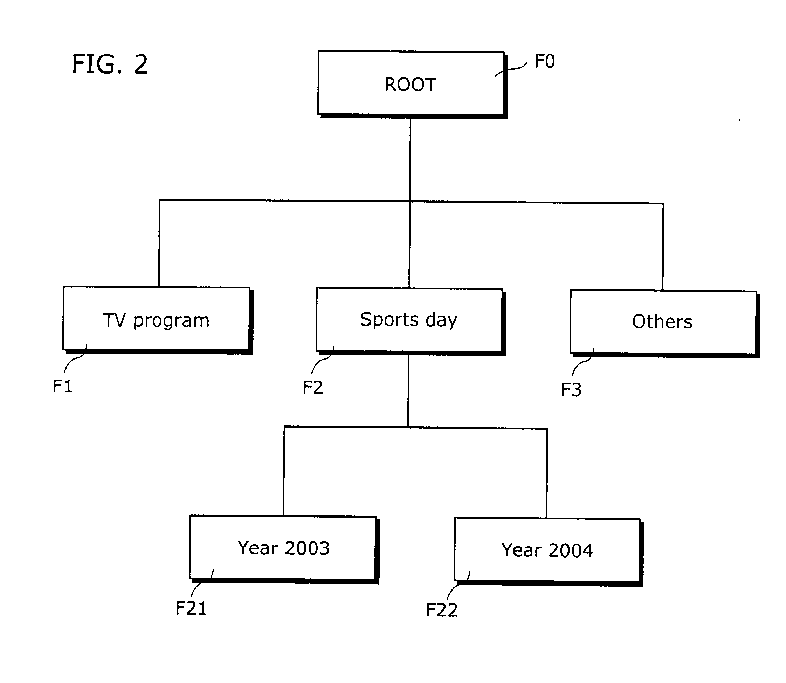

FIG. 2 shows an example configuration of the folders. In FIG. 2, "ROOT" folder consists of three folders, i.e. "TV program", "Sports day" and "Others". The content data may be stored in a given folder. More specifically, if the content data is a recording of a TV program, the data may be stored in the "ROOT" folder, the "Year 2004" folder, or the "TV program" folder. However, if the content data is stored in the "TV program" folder, when searching the content data, the desired content data is to be found with ease.

Since the communication unit 31 and the UPnP A/V command processing unit 401 are respectively the same components as the communication unit 30 and the UPnP A/V command processing unit 400, descriptions for these components are omitted. However, the following points differ from the communication above. More specifically, the communication unit 31 first receives a UPnP A/V command sent from the device 10. The UPnP A/V command processing unit 401 performs processing according to the received command. When performing the processing, the information for the content data accumulated in the content memory 71 is necessary, the UPnP A/V command processing unit 401, when needed, acquires information from the content information management unit 70, generates a UPnP A/V command from the acquired information, and send the information to the device 10 via the communication unit 31.

The solid lines shown in FIG. 1 represents a request for a list of content information from the device 10 to the device 11.

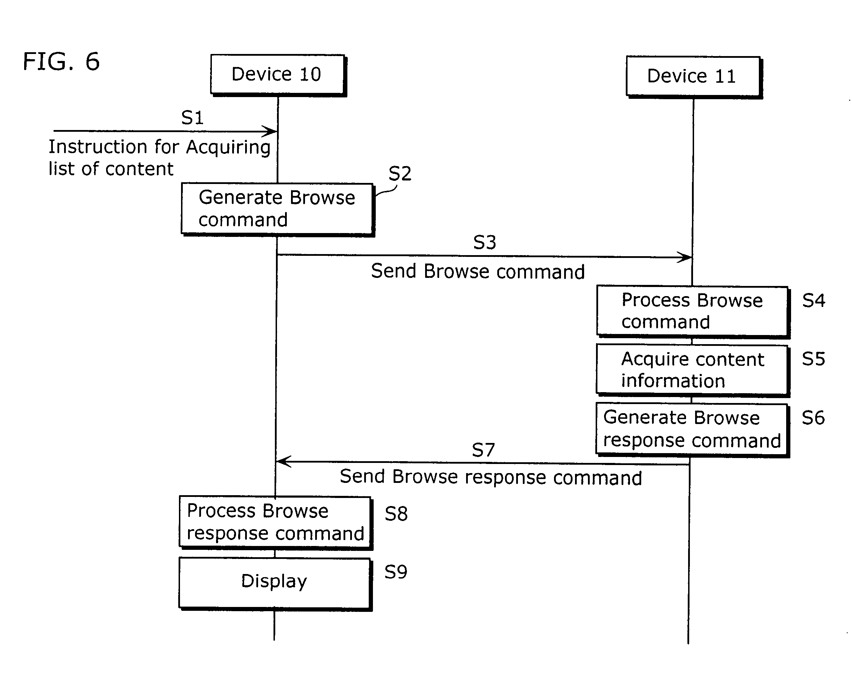

FIG. 6 is a diagram showing a process flow and a communication sequence of the device 10 and the device 11.
By executing an instruction, in the operating unit 5 of the device 10, for the list of content information in the device 11 (S1), a Browse command is generated in the UPnP A/V command processing unit (S2). The following can be designated as parameters of the Browse command: (i) a set of information for acquiring a list of content information; (ii) a sorting keyword, (iii) a starting position for acquiring content information, (iv) the number of content information to be acquired at one time, (v) an attribute of the content information to be acquired. In the first embodiment, the parameters are set as (i) "TV program", (ii) none, (iii) 0^{th}, (iv) five, and (v) all, and the parameters are sent from the communication unit 30 to the device 11 via the communication path 2 (S3).

In addition, the broken lines in FIG. 1 indicate a response to the content information list from the device 11 to the device 10.

In the device 11, the UPnP A/V command received via the communication unit 31 is processed in the UPnP A/V command processing unit 401 (S4). In the first embodiment, the UPnP A/V command processing unit 401 receives the Browse command, and acquires the respective parameters. In the UPnP A/V command processing unit 401, according to the designated parameters, information necessary for generating a Browse response command is acquired from the content information management unit 70 (S5), and the Browse response command is generated (S6). The generated Browse response command is sent from the communication unit 31 to the device 10 via the communication path 2 (S7).

In the device 10, the Browse response command is received via the communication unit 30, and the Browse response command is converted, into data which can be displayed on the display 6 in the UPnP A/V command processing unit 400(S8), and the data is displayed on the display 6 (S9).

In the case where 6 or more pieces of content data are accumulated in the content memory 71, by the instruction from the controlling unit 5, the remaining content information of the information which is being displayed on the display 6, can be displayed. In this case, in the Browse command from the device 10 to the device 11, the parameters may simply be modified to (iii) 6th, and (iv) 5. Processing for a Browse response from the device 11 to the device 10 is performed in the same manner.

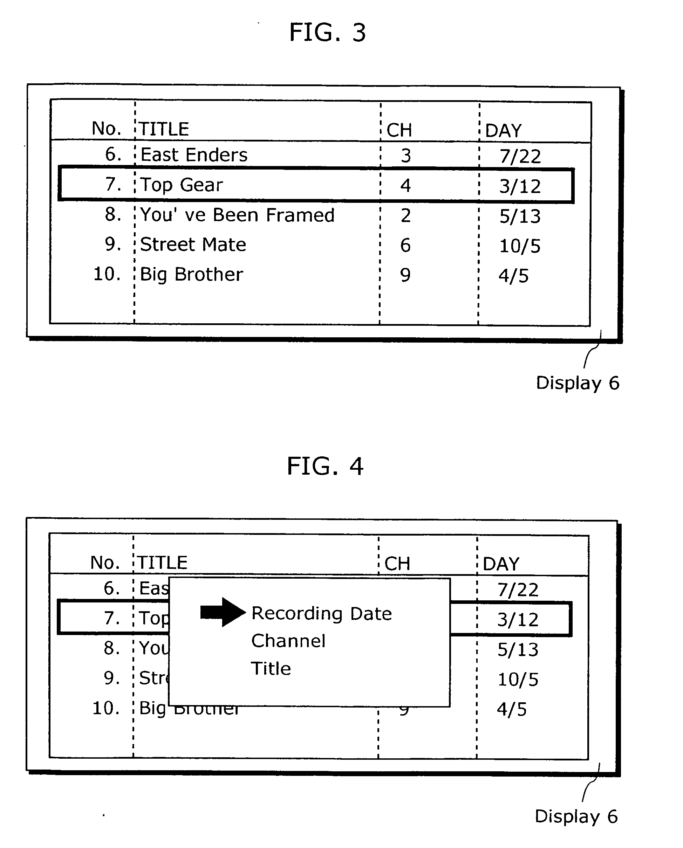

FIG. 3 shows a display example, on the display 6 of the device 10, of a list of content data accumulated in the content memory 71 of the device 11.

An example of sorting content information, with the list of content information in the device 11 being displayed on the display 6 of the device 10, is described hereafter.

FIG. 6 is a diagram showing a process flow and a communication sequence of the device 10 and the device 11.

The device 10 acquires sorting keywords for the device 11. More specifically, a GetSortCapabilities command is generated in the UPnP A/V command processing unit 400 (S10), and sent to the device 11 (S11). Note that the GetSortCapabilities command has no parameter. The device 11 which receives the GetSortCapabilities command, the command is processed by the UPnP A/V command processing unit 401 (S12), and a request for acquiring sorting keyword is sent to the content information management unit 70 (S13). The UPnP A/V command processing unit 401 generates a GetSortCapabilities response command from the acquired sorting keywords (S14), and sends the command to the device 10 (S15). In the device 10, the received GetSortCapabilities response command is processed in the UPnP A/V command processing unit 400 (S16), and is displayed on the display 6 (S17).

FIG. 4 shows a display example of the sorting keywords on the display 6. In FIG. 4, the device 11 is capable of responding to 3 sorting keywords, i.e. "Recording date", "Channel", and "Title".

By designating desired content data from the operating unit 5 (S18), and designating a desired sorting (S19), the UPnP A/V command processing unit 400 generates an X_GetStaringIndex command through the UPnP A/V extended command processing unit 410 (S20). The X_GetStaringIndex command sets, as parameters, (i) a sorting keyword, and (ii) an ID which uniquely identifies content data.

In the first embodiment, as parameters, (i) "Recording date" and (ii) the ID of "Top Gear" are designated and sent to the device 11 (S21).

In the device 11, when the X_GetStartingIndex command is received, the UPnP A/V command processing unit 401 identifies the command as an extended command, and the extended command processing unit 411 processes the command (S22). The UPnP A/V command processing unit 401 makes an inquiry to the content information management unit 70, and acquires position information of the content data after sorting (S23). In the UPnP A/V command processing unit 401 instructs the extended command processing unit 411 to generate an X_GetStartingIndex response command using the position information (S24), and to transmit the command from the communication unit 31 to the device 10 via the communication path 2 (S25).

In the device 10, when the X_GetStartingIndex response command is received, the UPnP A/V command processing unit 400 specifies the order of content data selected on the display 6 is in the 25th place, when "the recording date" is specified as a sorting keyword for the sort (S26).

On the display 6, in order to display "Top Gear" at the center of the screen, the device 10 sets (i) "TV program", (ii) "Recording date", (iii) 23rd, (iv) five, and (v) all as parameters, and generates a Browse command in the UPnP A/V command processing unit 400 (S2), and send the command from the communication unit 30 to the device 11 via the communication path 2.

The UPnP A/V command processing unit 401 in the device 11, performs processing according to the parameters set by the device 10 (S4, S5), and generates a Browse response command by the UPnP A/V command processing unit 401 (S6), and send the Browse response command from the communication unit 31 to the device 11 via the communication path 2 (S7).

In the device 10, the Browse response command is processed in the same manner (S8), and is displayed on the display 6 (S9).

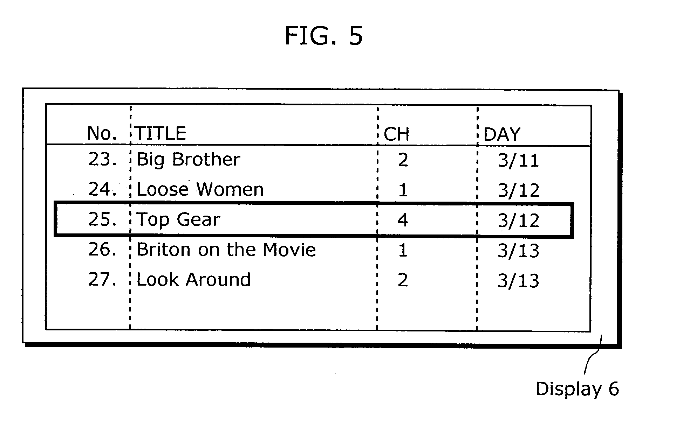

FIG. 5 shows an example of screen display after sorting.

A variation of the configuration shown in the first embodiment is described hereafter.
Although the parameters of the X_GetStartingIndex command are set as (ii) an ID which uniquely identifies the content data in the first embodiment, instead, using an ID for uniquely identifying the content data in the folder, an X_XGetstartingIndex command may be defined with parameters (ii-1) an ID which uniquely identifies the folder, and (ii-2) an ID uniquely identifies the content in the folder, and uses the command instead of the X_GetStartingIndex command.

Specifically, the X_XGetStartingIndex command includes, as parameters, (i) sorting keyword, (ii-1) an ID for uniquely identifying the folder, (ii-2) an ID for uniquely identifying content in the folder.

In FIG. 1, the extended command processing unit 410 and the extended command processing unit 411, processes X_GetStratingIndex command instead of X_GetStartingIndex command.

### (Second embodiment)

In the first embodiment, the configuration using the Browse command when acquiring a list of content information was described. In the second embodiment, a configuration which acquires a list of content information using a Search command is further described.

Descriptions of the block diagram of the second embodiment is omitted since the block diagram is the same as the diagram of the first embodiment. However, the second embodiment differs from the first embodiment in the following points.

More specifically, while the extended command processing unit 410 and the extended command processing unit 411 process the X_GetStartingIndex command in the first embodiment, the extended command processing unit 410 and the extended command processing unit 411 in the second embodiment process an X_SearchStartingIndex command.

The Search command includes the following as parameters: (i-1) a set of information for acquiring a list of content information; (i-2) search keyword; (ii) a sorting keyword; (iii) starting position for acquiring content information; (iv) the number of content information piece to be acquired at one time; (v) the number of content information piece to be acquired at one time; and (vi) attributes of the content information to be acquired.

More specifically, while in the Browse action shown in the first embodiment, the folder specified by (i) the set for acquiring the list of content information is an object for acquiring the list of content information, in the second embodiment, only content data matching a keyword specified in (ii) keyword for search from all of the folders specified in (i-1) a set for acquiring the list of content information will be an object.

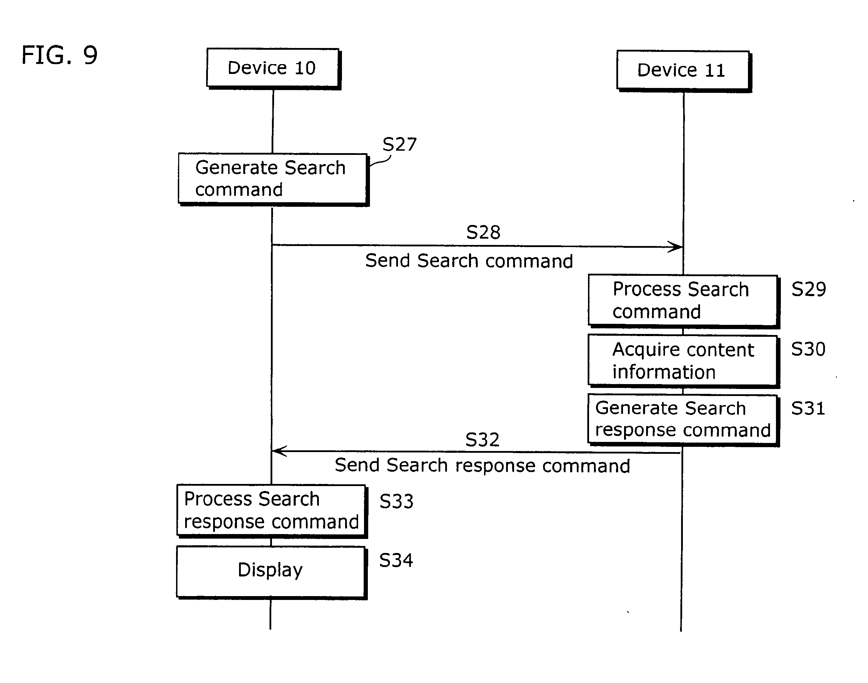

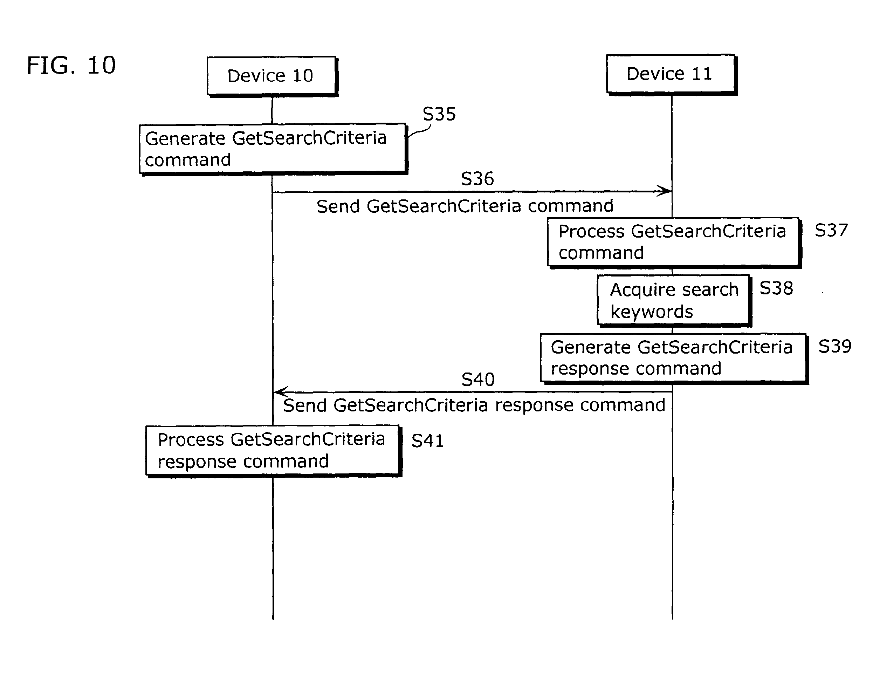

FIG. 9 shows a process flow and a communication sequence when acquiring the list of content information using a Search command, and FIG. 10 shows a process flow and communication sequence for acquiring a search keyword which is capable of specifying parameters when executing the Search command.

In the device 10, in order to acquire a search keyword for the device 11, GetSearchCriteria command is generated in the UPnP A/V command processing unit 410 (S35). No parameter to specify exists in the GetSearchCriteria command. The generated command is sent to the device 11 via the communication path 30 (S36). In the device 11, when the GetSearchCriteria command is received, the command is processed by the UPnP A/V command processing unit 401 (S37), and the corresponding search keyword is acquired by the content information management unit 70 (S38), generates a GetSearchCriteria response command (S39), and sends the command to the device 10 via the communication unit 31 (S40).

In the device 10, the response command is processed by the UPnP A/V command processing unit (S41), and a keyword which can be specified is acquired when acquiring a list of content information using the Search command for the content data accumulated in the content memory in the device 11.

A sequence for acquiring the list of content information from content data recorded within a day out of the content data accumulated in the content memory 71 in the device 11 is described hereafter.

In order to select the content data recorded within a day from all content data, the parameters are set as (i-1) "ROOT", (i-2) the recording date is yesterday or after, (ii) (iii) (iv), and (v) at any given value, and the Search command is executed.

When acquiring the list of content information using the Search command, the X_SearchStartingIndex command is used when acquiring position information of the specific content data. Since a process flow and a communication sequence of the X_SearchStartingIndex command is the same as the process flow and the communication sequence of the X_GetStartingIndex command, the descriptions are omitted. However, the X_SearchStartingIndex differs from the X_GetStartingIndex command in the following points. More specifically, while the X_GetStaringIndex command includes, as parameters, (i) a sorting keyword and (ii) an ID for uniquely identifying content data, the X_SearchStartingIndex command includes (i) sorting keyword, (ii-1) a set for acquiring a list of content information, (ii-2) keyword for search, and (iii) an ID which uniquely identifies the content data as parameters. Note that the variation shown in the first embodiment may be applied to the second embodiment.

### (Third embodiment)

In the abovementioned embodiments, configurations to execute sorting using the specific contents selected by acquiring, a position information of the content data in advance after sorting in the case where a list of content is displayed is described. Furthermore, in the third embodiment, a configuration for acquiring a list of content information with which a specific content data emerges in a specific position is described.

Descriptions for the block diagram in the third embodiment is omitted since the block diagram is the same diagram in the first embodiment. However, the third embodiment differs from the first embodiment in the following points.

More specifically, while the extended command processing unit 410 and the extended command processing unit 411 process the X_GetStartingIndex command, the extended command processing unit 410 and the extended command processing unit 411 in the third embodiment process an X_Browse command.

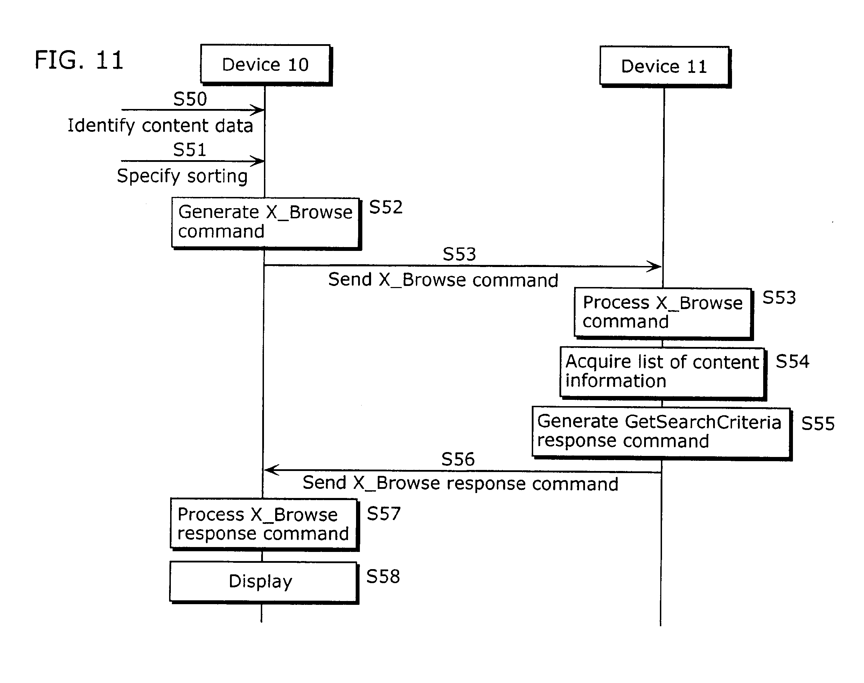

FIG. 11 is a diagram showing a process flow and a communication sequence of the device 10 and the device 11.

On the display 6 of the device 10, a list of content information in the content data accumulated in the content memory 71 of the device 11. By selecting desired content data from the operating unit 5 (S50) and executing instruction for sorting, sorting keyword is displayed on the display 6. Furthermore, when a desired sorting keyword is selected from the operating unit 5 (S51), the X_Browse command is generated by the extended command processing unit 410 which receives an instruction from the UPnP A/V command processing unit 400 (S52). In the X_Browse command, the following can be designated as parameters: (i) set of information for acquiring a list of content information; (ii) sorting keywords, (iii) an ID which uniquely identifies content to be a criteria, (iv) the order of emerging content, which is specified in (iii) as a criteria, (iv) the number of content information to be acquired at one time, and (vi) attributes of the content information to be acquired. In the third embodiment, (i) "TV program", (ii) "Recording date", (iii) an ID of "Top Gear", (iv) third, (v) five, (vi) all are set as parameters, and the parameters are sent from the communication unit 30 to the device 11 via the communication path 2 (S53).

In the device 11, the X_Browse command is received, an instruction is sent from the UPnP A/V command processing unit 401 to the extended command processing unit 411, a parameter specified by the device 10 is extracted, and the UPnP A/V command processing unit requests, according to the parameter, a list of content information to the content information management unit 70 (S54). The UPnP A/V command processing unit 401, after the information is acquired, instructs the extended command processing unit 411 to generate an X_Browse response command, and send the generated X_Browse response command to the device 10 via the communication unit 31 (S56).

In the device 10, the Browse response command is processed (S57), and is displayed on the display 6 (S58). Note that the second embodiment may be applied to the third embodiment.

### (Fourth embodiment)

In the embodiments above, in the device 10, when sorting is performed, after an instruction for displaying a list of sorting keywords is sent from the operating unit 5, the list of sorting keyword is displayed on the display 6, and sorting keywords is then selected to perform sorting is described. In the fourth embodiment, a configuration for sorting by one input from the operating unit 5 is described.

Since a block diagram, a process flow, a diagram showing a communication sequence diagram in the fourth embodiment is the same diagrams as the block diagram, process flow, and the communication sequence diagram, descriptions for these diagrams are omitted.

In the operating unit 5 of the device 10, by executing an instruction for displaying the list of content information in the device 11 (S1), a Browse command is generated in the UPnP A/V command processing unit (S2). In the Browse command, the following can be designated as parameters: (i) set of information for acquiring a list of content information; (ii) sorting keywords, (iii) starting position for acquiring content information, (iv) the number of content information pieces acquired at one time, (v) the number of content information pieces acquired at one time, and (vi) attributes of the content information to be acquired. Here, the parameters are set as (i) "TV program", (ii) none, (iii) 0th, (iv) five, and (v) all, the parameters are to be transmitted from the communication unit 30 to the device 11 via the communication path 2.

In the device 11, the UPnP A/V command received via| the communication unit 31 is processed in the UPnP A/V command processing unit 401 (S4). Here, the Browse command is received, and the UPnP A/V command processing unit 401 receives the respective parameters. In the UPnP A/V command processing unit 401, according to the designated parameters, information necessary for generating Browse response command from the content information management unit 70 is acquired (S5), and Browse response command is generated (S6). The Browse response command generated is transmitted from the communication unit 31 to the device 10 via the communication path 2.

In the device 10, the Browse response command is received via the communication unit 30, and the Browse response command is converted to data which can be displayed on the display 6 in the UPnP A/V command processing unit 400 (S8), and is displayed on the display 6 (S9).

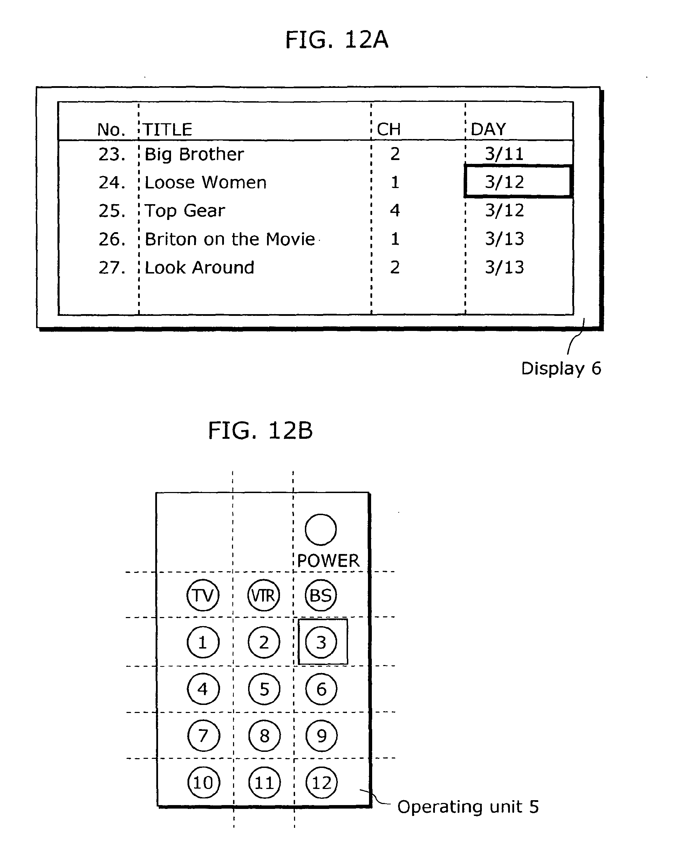

FIG. 12 shows a display example, on the display 6 of the device 10, a list of content data accumulated in the content memory 71 of the device 11 and an example of placement of input buttons in the operating unit 5.

As shown in FIG. 12 A, on the display 6 of the display example is a matrix with rows "TITLE", "CH", and "DAY" and columns "No. 23", "No. 24", and "No. 25", and the position of the buttons shown in FIG. 12 B is allocated to the respective information. For example, the date, "March 12^{th}", which is the information related to the recording date of the "Loose Women" can be represented as row 2 and column 3 in a matrix expression. To put it differently, this information is allocated to the key "3" in the controller 5.

Here, when the key "3" in the operating unit 5 is pressed, a sorting for "Loose Women" using a keyword "recording date" is performed.

More specifically, as parameters, IDs of (i) "Recording date" and (ii) "Loose Women" are designated and transmitted to the device 11 (S21).

In the device 11, when the X_GetStartingIndex command is received, the UPnP A/V command processing unit 401 identifies the command as an extended command, and the extended command processing unit 411 performs processing (S22). The UPnP A/V command processing unit 401 makes an inquiry to the content information management unit 70, and acquires position information of the content data after sorting is performed (S23). In the UPnP A/V command processing unit 401, instruction is made to the extended command processing unit 411 to generate X_GetStartingIndex response command (S24), and to transmit the command from the communication unit 31 to the device 10 via the communication path 2.

In the device 10, which received X_GetStartingIndex response command, the order of content data selected on the display 6 specifies "the recording date" as a sorting keyword, and find out that the data is in the 25th place after sorting.

On the display 6, in order to display "Top Gear" in the center of the screen, the device 10 sets (i) "TV program", (ii) "Recording date", (iii) 23rd, (iv) five, and (v) all as parameters, and generates a Browse command in the UPnP A/V command processing unit 400 (S2), and transmit to the device 11 from the communication unit 30 to the device 11 via the communication path 2.

The UPnP A/V command processing unit 401 in the device 11, performs processing according to the parameters set by the device 10 (S4, S5), and generates a Browse response command (S6), and transmit the Browse response command to the device 11 from the communication unit 31 via the communication path 2.

In the device 10, the Browse response command is processed in the same manner (S8), and is displayed on the display 6 | (S9). Note that the third embodiment may be applied in the fourth embodiment.

### Industrial Applicability

The server device, the client device, and a method for acquiring a list of data according to the present invention is applicable to, for example, a personal computer or a recording device which is capable of acquiring content via a network.

## Claims

1. A server device in a system in which said server device and a client device communicate with each other via a communication path, said server device comprising:
a storage unit in which plural pieces of data are stored;
a management unit;
a command processing unit; and
a communication unit,
wherein, when said communication unit receives a list acquisition command from said client device, said command processing unit is operable to instruct said management unit to use a sorting keyword if the sorting keyword is specified by the list acquisition command, and to indicate a data range to said management unit if the data range is specified by the list acquisition command,
said management unit is operable to sort data stored in said storage unit using the sorting keyword, to generate a data list within the data range, and to provide the list to said command processing unit,
said command processing unit is operable to generate a list acquisition response command including the data list, and send the command to said client device via said communication unit.

2. The server device according to Claim 1,
wherein, when said communication unit further receives a position information acquisition command from said client device, said command processing unit is operable to instruct said management unit to use the sorting keyword if the sorting keyword is specified by the position information acquisition command, and to indicate specific data to said management unit if the specific data is specified by the list acquisition command,
said management unit is operable to sort the data stored in said storage unit using the sorting keyword, to subsequently acquire position information of the specific sorted data, and to provide the position information to said command processing unit, and
said command processing unit is operable to generate a position information acquisition response command including the position information, and to send the command to said client device via said communication unit.

3. The server device according to Claim 1,
wherein, when said communication unit receives the list acquisition command, said command processing unit is operable to instruct said management unit to use the sorting keyword if the sorting keyword is specified by the list acquisition command, and to indicate the data to said management unit if the data is specified by the list acquisition command,
said management unit is operable to sort the data stored in said storage unit using the sorting keyword and to generate a data list within the range including the data, and to provide the list to said command processing unit,
said command processing unit is operable to generate a list acquisition response command including the data list, and to send the command to said client device via said communication unit.

4. A client device in a system in which a server device and the client device communicates with each other via a communication path, said client device comprising:
a display unit;
an operating unit;
a command processing unit; and
a communication unit,
wherein said operating unit is operable to instruct said command processing unit to use a sorting keyword if the sorting keyword is specified, and to indicate a data range to said command processing unit if the data range for a list acquisition request is specified;
said command processing unit is operable to add: the sorting keyword to a parameter if the sorting keyword is specified; or a data range to the parameter if the data range is specified, to generate the list acquisition command, and to send the command to the server device via said communication unit,
when said communication unit receives a list acquisition response command in response to the list acquisition command from the server device, said command processing unit is operable to instruct said display unit to display the data list included in the list acquisition response command.

5. The client device according to Claim 4,
wherein said command processing unit is further operable, when the list acquisition request is indicated by said operating unit, if the data to be a criteria is specified, or a sorting keyword is specified by the operating unit, to generate a position information acquisition command of the data after sorting using the sorting keyword is performed and to send the command to the server device via said communication unit,
when said communication unit receives a position information acquisition response command in response to the position information acquisition command from the server device, the sorting keyword specified when acquiring the position information is added to the parameter, a data range including the specified data is added to the parameter using the position information acquisition response command, and a list acquisition command is generated and sent to the server device via said communication unit,
when said communication unit receives a list acquisition response command from the server device in response to the list acquisition command, said command processing unit is operable to instruct said display unit to display the data list included in the list acquisition response command.

6. The client device according to Claim 4,
wherein said operating unit is further operable to instruct the command processing unit to use the sorting keyword when the sorting keyword is specified, and to specify the data to said command processing unit when the desired data is specified,
said command processing unit is operable to add: the sorting keyword to the parameter when the sorting keyword is specified ; or data when the data is specified, and to generate a list acquisition command and to send the command to said server device via said communication unit,
when said communication unit receives a list acquisition response command, from said server device, in response to the list acquisition command, said command processing unit instructs said display unit to display a data list included in the list acquisition response command.

7. The client device according to Claim 4, further operable to specify a set of data to be sorted when generating the data information list acquisition command.

8. The client device according to Claim 4, further comprising
an input unit operable, when determining the sorting keyword and data which are input parameters used for generating the position information acquisition command, to display the sorting keyword and data in rows and columns, the input unit corresponding to the rows and the columns of said display unit.

9. A method for acquiring a data list in a system which a server device and a client device communicate with each other via a communication path, the method comprising steps of:
a step of acquiring a data list;
a step of acquiring a list of keywords which can be specified when acquiring a list of sorted data sorted by a specific keyword;
a step of specifying a specific data and a sorting keyword;
a step of acquiring the position information of the specific data after sorting using the specific keyword is performed, and
a step of acquiring the data list including the specific data with the specific keyword specified based on the acquired position information.

10. The method for acquiring the data list according to Claim 9, the method further comprising
a step of acquiring, when a sorted data list information using the specific keyword is acquired, the sorted data list information including the specific data, the sort being performed using the specific keyword.

## Amended claims

### Amended claims under Art. 19.1 PCT

**1.** (Amended) A server device in a system in which said server device and a client device communicate with each other via a communication path, said server device comprising:
a storage unit in which plural pieces of data are stored;
a management unit;
a command processing unit; and
a communication unit,
wherein, when said communication unit receives a list acquisition command from said client device, said command processing unit is operable to instruct said management unit to use a sorting keyword if the sorting keyword is specified by the list acquisition command, and to indicate a data range to said management unit if the data range is specified by the list acquisition command,
said management unit is operable to sort data stored in said storage unit using the sorting keyword, to generate a data list within the data range, and to provide the list to said command processing unit,
said command processing unit is operable to generate a list acquisition response command including the data list, and send the command to said client device via said communication unit,
when said communication unit further receives a position information acquisition command from said client device, said command processing unit is operable to instruct said management unit to use the sorting keyword if the sorting keyword is specified by the position information acquisition command, and to indicate specific data to said management unit if the specific data is specified by the list acquisition command,
said management unit is operable to sort the data stored in said storage unit using the sorting keyword, to subsequently acquire position information of the specific sorted data, and to provide the position information to said command processing unit, and
said command processing unit is operable to generate a position information acquisition response command including the position information, and to send the command to said client device via said communication unit.

**2.** (Cancelled)

**3.** The server device according to Claim 1,
wherein, when said communication unit receives the list acquisition command, said command processing unit is operable to instruct said management unit to use the sorting keyword if the sorting keyword is specified by the list acquisition command, and to indicate the data to said management unit if the data is specified by the list acquisition command,
said management unit is operable to sort the data stored in said storage unit using the sorting keyword and to generate a data list within the range including the data, and to provide the list to said command processing unit,
said command processing unit is operable to generate a list acquisition response command including the data list, and to send the command to said client device via said communication unit.

**4.** (Amended) A client device in a system in which a server device and the client device communicates with each other via a communication path, said client device comprising:
a display unit;
an operating unit;
a command processing unit; and
a communication unit,
wherein said operating unit is operable to instruct said command processing unit to use a sorting keyword if the sorting keyword is specified, and to indicate a data range to said command processing unit if the data range for a list acquisition request is specified;
said command processing unit is operable to add: the sorting keyword to a parameter if the sorting keyword is specified; or a data range to the parameter if the data range is specified, to generate the list acquisition command, and to send the command to the server device via said communication unit,
when said communication unit receives a list acquisition response command in response to the list acquisition command from the server device, said command processing unit is operable to instruct said display unit to display the data list included in the list acquisition response command,
said command processing unit is further operable, when the list acquisition request is indicated by said operating unit, if the data to be a criteria is specified, or a sorting keyword is specified by the operating unit, to generate a position information acquisition command of the data after sorting using the sorting keyword is performed and to send the command to the server device via said communication unit,
when said communication unit receives a position information acquisition response command in response to the position information acquisition command from the server device, the sorting keyword specified when acquiring the position information is added to the parameter, a data range including the specified data is added to the parameter using the position information acquisition response command, and a list acquisition command is generated and sent to the server device via said communication unit,
when said communication unit receives a list acquisition response command from the server device in response to the list acquisition command, said command processing unit is operable to instruct said display unit to display the data list included in the list acquisition response command.

**5.** (Cancelled)

**6.** The client device according to Claim 4,
wherein said operating unit is further operable to instruct the command processing unit to use the sorting keyword when the sorting keyword is specified, and to specify the data to said command processing unit when the desired data is specified,
said command processing unit is operable to add: the sorting keyword to the parameter when the sorting keyword is specified ; or data when the data is specified, and to generate a list acquisition command and to send the command to said server device via said communication unit,
when said communication unit receives a list acquisition response command, from said server device, in response to the list acquisition command, said command processing unit instructs said display unit to display a data list included in the list acquisition response command.

**7.** The client device according to Claim 4, further operable to specify a set of data to be sorted when generating the data information list acquisition command.

**8.** The client device according to Claim 4, further comprising
an input unit operable, when determining the sorting keyword and data which are input parameters used for generating the position information acquisition command, to display the sorting keyword and data in rows and columns, the input unit corresponding to the rows and the columns of said display unit.

**9.** A method for acquiring a data list in a system which a server device and a client device communicate with each other via a communication path, the method comprising steps of:
a step of acquiring a data list;
a step of acquiring a list of keywords which can be specified when acquiring a list of sorted data sorted by a specific keyword;
a step of specifying a specific data and a sorting keyword;
a step of acquiring the position information of the specific data after sorting using the specific keyword is performed, and
a step of acquiring the data list including the specific data with the specific keyword specified based on the acquired position information.

**10.** The method for acquiring the data list according to Claim 9, the method further comprising
a step of acquiring, when a sorted data list information using the specific keyword is acquired, the sorted data list information including the specific data, the sort being performed using the specific keyword.

Statement under Art. 19.1 PCT
Claim 1 is amended so as to include Claim 2. In addition, Claim 4 is amended so as to include Claim 5. The amendment clearly defines that the server device according to the present invention receives via a communication unit, a list acquisition command and a position information acquisition command, and responds to the commands. Furthermore, the amendment clearly defines that the client device according to the present invention receives a list acquisition response command and a position information acquisition response command.

The Applicant has amended Claims 1 and 4, and cancelled Claims 2 and 5, and no change has been made to the other claims.
